# EUROPEAN PATENT APPLICATION

(11) **EP 2 227 066 A1**
(43) Date of publication of application: **08.09.2010**
(21) Application number: 09753474.7
(22) Date of filing: 22.05.2009
(51) Int. Cl.: H04W 88/00

(54) **MESSAGE SERVICE IMPLEMENTATION METHOD AND DEVICE**

(30) Priority: 26.05.2008 CN 200810028270
(71) Applicant: Huawei Technologies Co., Ltd., Longgang District, Shenzhen Guangdong 518129 (CN)
(72) Inventor: HE, Chaoqun, Shenzhen 518129 (CN); MU, Dazhi, Shenzhen 518129 (CN); ZHANG, Feng, Shenzhen 518129 (CN); HOU, Xiaolong, Shenzhen 518129 (CN)
(74) Representative: Kreuz, Georg Maria
(86) International application number: PCT/CN2009/071941
(87) International publication number: WO 2009/143756

(57) **Abstract**

A method for realizing message service is provided, and the method includes: receiving, from a receiving terminal, a response message of the transmission failure of a message of the first type ; generating, according to the response message, a message of the second type to be retransmitted by means of the flash short message; and transmitting the message of the second type to the receiving terminal. Correspondingly, an apparatus for realizing the message service is also provided. The present invention may upgrade the success rate of the message transmission of the MSC, thereby improving the satisfactory degree of the customer as well as the service quality of the operator.

## Description

This application claims priority to Chinese Patent Application No. 200810028270.8, filed on May 26, 2008, which is hereby incorporated by reference in its entirety.

### FIELD OF THE TECHNOLOGY

The present invention relates to communications and , in particular, to a method and apparatus for realizing message service.

### BACKGROUND OF THE INVENTION

Along with the popularization of short messages, voice messages, multimedia messages, etc, a mobile phone easily gets a result of "Memory is full" with messages if the memory of the mobile phone is limited, thereby causing the clients inconvenience in normal message receiving. The "Memory is full" refers to that the storage pre-allocated for each type of message is fully occupied, and no more new messages would be stored. In order to upgrade the success rate of message transmission of the Message Service Center (MSC), a function of multiple scheduling is added by the MSC, and both the interval and times of transmission repetition can be configured. This solution can reduce the rate of failure of the MSC to some extend.

When a message transmission fails, the MSC determines the strategy of the next processing according to a scheduling configuration. A conventional strategy is to retransmit the message, for example, setting the retransmission interval to 2 hours and the maximum retransmission times to 10 and deleting the message if the retransmission fails even after 10 times.

From the present statistics, although the MSC adopts the repeat scheduling mechanism to upgrade the success rate of message transmission when the memory is full, plenty of messages, however, still fail to reach the clients when the mobile phone users do not realize that the memory is full. Once these messages accumulate in the MSC, a lot of MSC resources are occupied, and then, the MSC may reject new messages submitted by other users for limited resources.

### SUMMARY OF THE INVENTION

The present invention provides a method and apparatus for realizing message service, so that the message that may not reach the terminal whose memory is full temporarily may be stored in the MSC and retransmitted quickly and successfully.

According to a first aspect, the present invention provides a method for realizing message service, including:
receiving, from a receiving terminal, a response message of a transmission failure of a message of first type ;
generating a message of second type according to the response message; and sending the message of second type to the receiving terminal.

According to a second aspect the present invention provides an apparatus for realizing the message service, and the apparatus includes the following units:
a message receiving unit, configured to receive a response message of the transmission failure of a message of first type sent by the receiving terminal;
a message processing unit, configured to generate a message of second type according to the response message; and
a message transmitting unit, configured to transmit the message of second type to the receiving terminal.

In the present invention, the message of second type is generated according to the response message of the transmission failure of the message of first type to overcome the problem of the transmission failure of the message of first type , thereby upgrading the message transmission success rate and improving the clients' satisfactory degree.

### BRIEF DESCRIPTION OF THE DRAWINGS

Figure 1 is a schematic flowchart of a method for realizing the service message in an embodiment;
Figure 2 is a schematic flowchart of a method for realizing the service message in another embodiment;
Figure 3 is an exemplary diagram for realizing message transmission based on the method embodiment provided in Figure 2;
Figure 4 is a structural diagram of an apparatus for realizing message service in an embodiment; and
Figure 5 is a structural diagram of an apparatus for realizing message service in another embodiment.

### DETAILED DESCRIPTION OF THE EMBODIMENTS

The present invention is hereinafter described in detail with reference to accompanying drawings.

An embodiment of the present invention provide a method for realizing message service, where, after the response message of the transmission failure of a message of a first type is received, a message of a second type is generated and sent to the receiving terminal.

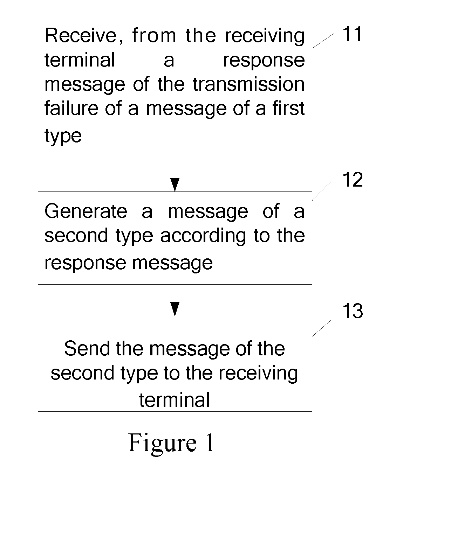

Figure 1 is a flowchart of a method for realizing the service message in an embodiment; as shown in Figure 1, the method includes the following steps:
Step 11: Receive, from a receiving terminal, a response message of a transmission failure of a message of a first type .

In addition, before receiving the response message of the transmission failure of the message of the first type , the message of the first type may be sent to the receiving terminal.

Step 12: Generate a message of a second type according to the response message.

In addition, on the basis of the response message of the transmission failure of the message of the first type , the message of the second type is generated; and the message of the second type may overcome the problem of the transmission failure of the message of the first type . In the embodiment of the present invention, the content of the message of the second type may be the same of the content of the message of the first type, and/or a prompt for the user (for example, a prompt indicates to the user that the receiving terminal is currently incapable of receiving a message).

Step 13: Transmit the message of the second type to the receiving terminal.

In the embodiment of the present invention, the message of the first type and the message of the second type may be a multimedia message, an ordinary short message (such as a text short message in the prior art), a voice message, a flash short message, etc. For example, the message of the first type is a multimedia message, and the message fails to be transmitted to the receiving terminal because the receiving terminal does not support multimedia message or the memory is already full. The message of the second type is generated according to the response message, where the message of the second type is a short message including the key information contained in the message of the first type; and then the message of the second type is sent to and received by the receiving terminal, thereby resolving the problem that the receiving terminal is unable to receive the original message.

In the embodiment of the present invention, when the message of the first type fails to be sent to the receiving terminal, the message of second type is generated on the basis of the response message and sent to the receiving terminal; as a result, the receiving terminal may receive the message as soon as possible.

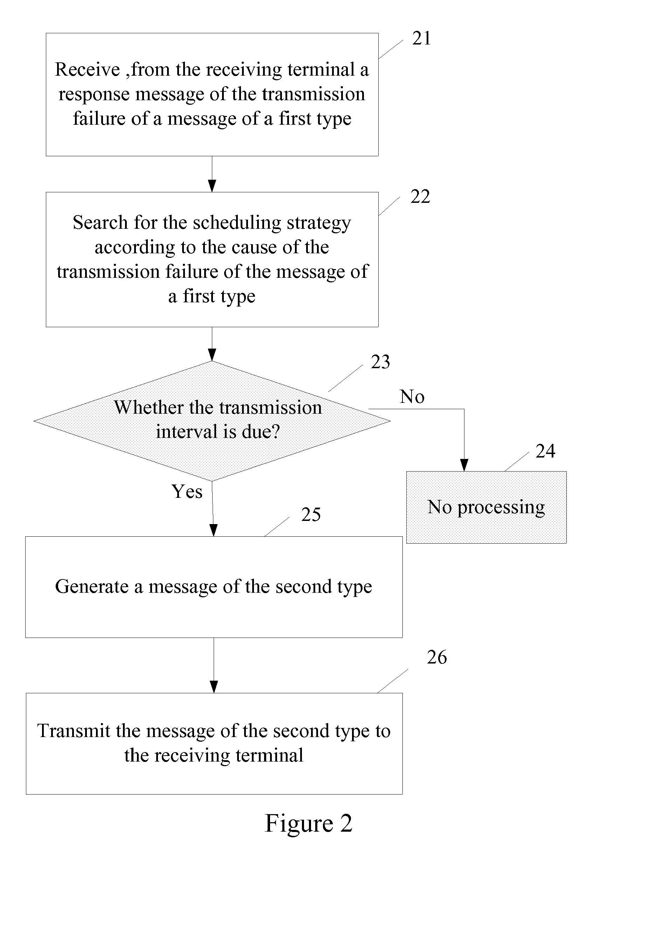

Figure 2 is a schematic flowchart of a method for realizing the service message in another embodiment; as shown in Figure 2, the method includes the following steps:
Step 21: Receive a response message of the transmission failure of a message of first type.

In this embodiment, before receiving the response message, the message of first type of the originating terminal is sent to the receiving terminal. In addition, the failure is due to that memory of the receiving terminal is full; and the response message carries the cause of the transmission failure of the message of the first type "Memory of the receiving terminal is full".

In this embodiment of the present invention, since the response message carries the cause of the transmission failure of the message of the first type , the specific generating process of the message of second type on the basis of the response message includes the steps 22∼25 as shown in Figure 2.

Step 22: Search for the preconfigured scheduling strategy according to the cause of the transmission failure of the message of the first type "the memory of the receiving terminal is full". In the embodiment, the scheduling strategy includes a retransmission mode of 'transmitting by means of a flash short message', a retransmission interval and/or retransmission times. The flash short message is a new type of short message, where the flash short message may be transmitted to the mobile phone in a special format that the flash short message may be displayed on the mobile screen immediately, without occupying storage and may be deleted automatically as long as it is not saved manually, which avoids a process of manual deletion.

For example, when the cause of the transmission failure of the message of the first type is that the memory of the receiving terminal is full, the preconfigured scheduling strategy is searched for. The searched scheduling strategy may be "retransmitting by means of flash short message once at an interval of 10 minutes". It needs to be noted that in the embodiment, the retransmission interval and times may be set according to specific situations. The retransmission interval here may also be set to 0, indicating that the second type information may be generated directly after the response message of the transmission failure is received.

Step 23: The retransmission interval is scheduled according to the scheduling strategy. If the retransmission interval is not reached, then the process goes to step 24; if the retransmission interval is reached, the process goes to step 25.

Step 25: The message of the second type is generated. The generating of the message of the second type as a flash short message is as follows: setting the data code field of the message of the second type to a value of a specific format, where the value of the specific format meets the requirement of the flash short message. In the embodiment of the present invention, the fifth bit of the data code field is set to 1. The generated message of the second type includes the following three types: a message which is the same of a message of the first type but with a modified data code field, a prompt message, or a message of the content including the content of the message of first type and the prompt message.
1. A message which is similar to a message of the first type but with a modified data code field
   In the embodiment of the present invention, when the memory of receiving terminal is full, the message of the first type which fails to be transmitted to the receiving terminal is modified into a message of the second type, where the message of the second type is retransmitted by means of a flash short message without changing the content of the message of the first type.
   When the retransmission interval of the scheduling strategy is reached, the data code field of the message of the first type is modified by setting the fifth bit of the data code field to 1, and then the flash short message is generated as the message of the second type. For example, the data code field of the ordinary short message may be 0, 4 or 8; if the data code field is 0, then it is modified into 0x10; if the data code field is 4, then it is modified into 0x14; if the data code field is 8, then it is modified into 0x18.
2. A prompt message which includes information for notifying a user
   In the embodiment of the present invention, when the retransmission interval in the scheduling strategy is reached, the message of the second type is generated, where the message of the second type is a prompt message for reminding the user of the memory state of the receiving terminal. For example, the prompt content may be as follows: the memory is full, please delete in time; 10 short messages are waiting to be transmitted. In this case, the message of the second type does not include the content of the message of the first type. In the embodiment of the present invention, the user is notified of the current memory state of the mobile phone, so that the user may delete the short messages in the mobile phone in time.
3. A message including the information of the abstract of the message of the first type
   In the embodiment of the present invention, the generated message of the second type may include the prompt content and the content of message of the first type, so as to ensure that the receiving terminal may receive the message promptly and to remind the user of the current memory state of the mobile phone.

After generating the message of the second type, the process goes to the following step.

Step 26: Transmit the message of the second type to the receiving terminal. When the message of the second type is transmitted successfully, a response message of successful transmission of the message of the second type is received.

In addition, when the message of the second type is transmitted successfully, the message of the first type may also be transmitted to the receiving terminal according the preconfigured rule. In an embodiment of the present invention, when the message of the second type contains only the prompt content, the process further includes the scheduling according to the preconfigured scheduling strategy and retransmitting the message of the first type to the receiving terminal. In addition, the preconfigured scheduling strategy may be the retransmission interval, retransmission times, etc. For example, the preconfigured retransmission interval is set to 30 minutes; so when the message of the second type, as a notification message, is transmitted to the receiving terminal, the message of the first type is retransmitted to the receiving terminal in 30 minutes.

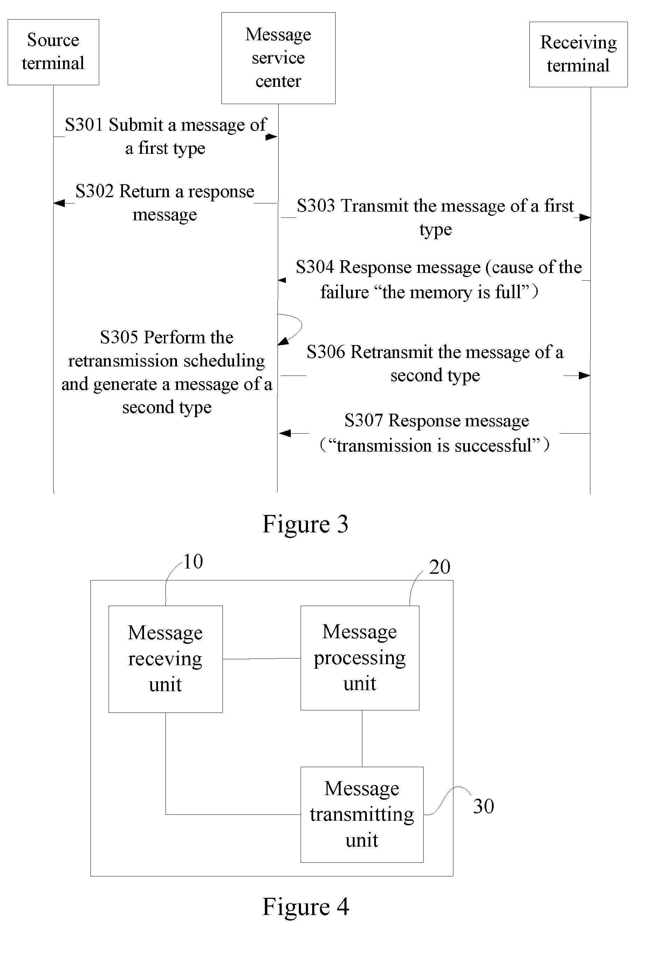

Figure 3 is an example of transmitting a message from an originating terminal to an receiving terminal on the basis of Figure 2, including the following steps:
S301: The MSC obtains the message of the first type submitted by the originating terminal;
S302: The MSC returns a response message to the originating terminal;
S303: The MSC transmits the message of the first type to the receiving terminal;
S304: The receiving terminal returns a response message of the transmission failure to the MSC;
S305: The MSC performs the retransmission scheduling according to an scheduling strategy; when the retransmission interval of the retransmission strategy is reached, a message of the second type is generated.

The preconfigured scheduling strategy is searched according to the transmission failure of the message of first type carried in the response message, and the scheduling is performed accordingly. When the retransmission interval in the scheduling strategy is reached, a message of the second type is generated. The retransmission interval may also be set to 0, i.e. the message of the second type is generated at the time the MSC receives the response message of the transmission failure. For example, in the case that the message of the first type is an ordinary short message and the message of the second type is a flash short message, the MSC is responsible for generating the message of the second type; in the case that the message of the first type is an ordinary short message and the message of the second type is a multimedia message, the MSC may trigger the multimedia service center to generate the multimedia message.

Step 306: The MSC transmits the message of the second type to the receiving terminal;

If the message of the second type is a flash message or an ordinary message, the MSC is a short message service center (SMSC); if the message of the second type is a multimedia message, then the MSC is a multimedia message service center (MMSC).

Step 307: If the transmission is successful, the response message of the transmission success of the message of the second type is received, where the response message is sent by the receiving terminal.

The method in the embodiment of the present invention upgrades the success rate of the message transmission of the MSC, thereby improving the satisfactory degree of the customer as well as the service quality of the operator.

An embodiment of the present invention provides an apparatus for realizing the message service, i.e. when a message of the first type fails to reach the receiving terminal, a message of the second type is generated and transmitted to the receiving terminal.

Figure 4 is a structural diagram of an apparatus for realizing message service in an embodiment; as shown in Figure 4, this apparatus may be applied in the above embodiments, where the apparatus includes: a message receiving unit 10, configured to receive the response message of the transmission failure of the message of the first type; a message processing unit 20, configured to generate a message of the second type according to the response message; a message transmitting unit 30, configured to send the message of the second type to the receiving terminal.

In an embodiment of the present invention, before the message receiving unit 10 receives the response message of the transmission failure of the message of the first type, the message transmitting unit 30 has transmitted the message of the first type to the receiving terminal. The message processing unit 20 generates a message of the second type according to the response message of the transmission failure, and problem of the transmission failure of the message of the first type may be overcome. In an embodiment of the present invention, the content of the message of the second type may be the content of the message of the first type and/or prompt information (for example, a prompt message which reminds the user that the receiving terminal is incapable of receiving messages currently).

In the embodiment of the present invention, the apparatus for realizing the message service may enable the receiving terminal to receive the message destined for the receiving terminal.

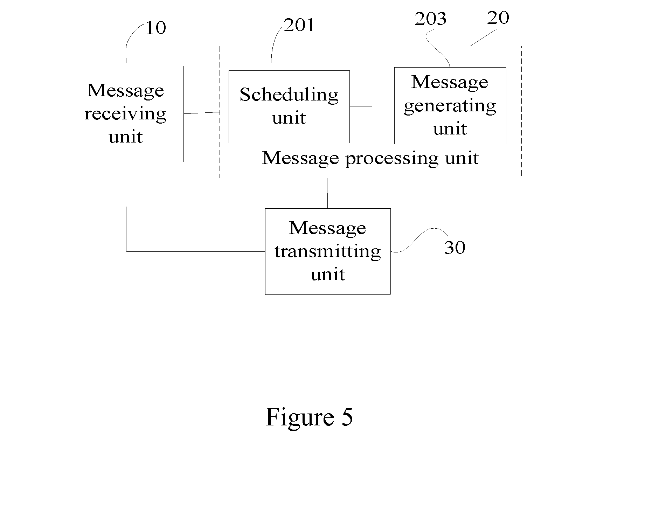

Figure 5 is a structural diagram of an apparatus for realizing message service in another embodiment.

As shown in Figure 5, the apparatus includes: a message receiving unit 10, a message processing unit 20, and a message transmitting unit 30.

The message receiving unit 10 is configured to receive the response message of the transmission failure of the message of the first type , where the response message includes the cause of the transmission failure of the message of the first type and the cause of the transmission failure is that the memory of the receiving terminal is full.

The message processing unit 20 is configured to generate a message of the second type according to the response message from the message receiving unit, where the message processing unit 20 includes the following units.

A scheduling unit 201 is configured to search for the scheduling strategy preconfigured according to the cause of the transmission failure of the message of the first type and schedule according to the corresponding scheduling strategy. In the embodiment of the present invention, the scheduling strategy includes: the retransmission method (being flash short message), the retransmission interval and the retransmission times. The searched corresponding scheduling strategy may be "retransmitting by means of flash short message at an interval of 10 minutes for one time". It needs to be noted that in the embodiment of the present invention, the retransmission interval and times may be set according to the specific situation.

A message generating unit 203 is configured to generate the second type information when the retransmission interval is reached. If the scheduling strategy specifies the means of the flash short message, the message generating unit 203 set the data code filed of the message of the second type to a value of a specific format which is a requirement of the flash short message. In the embodiment of the present invention, the value of the 5bit in the data code field of the message of the second type of is set to 1. The message of the second type generated by the message generating unit 203 includes the following three types: a message of the first type modified in the data code field, a prompt message, or a message of the content including the message of the first type and the prompt message.

### 1. A message of the first type modified in the data code field

In the embodiment of the present invention, when the memory of receiving terminal is full, the message processing unit 20 modifies the message of the first type which fails to be transmitted to the receiving terminal into a message of the second type, where the message of the second type is retransmitted by means of flash short message without changing the content of the message of the first type .

When the retransmission interval of the scheduling strategy is reached, the message generating unit 203 modifies the 5bit of the data code field of the message of the first type to 1, and then a flash short message is generated as the message of the second type.

### 2. A prompt message

In the embodiment of the present invention, the apparatus generates a prompt as the message of the second type and transmits the prompt, where the message of the second type is a prompt message for reminding the user of the memory state of the receiving terminal. In this case, the message of the second type does not include the content of the message of the first type . When the retransmission interval is reached, the message generating unit 203 sets the 5bit in the data code field of the message of the second type into 1, and meanwhile sets the content of the message of the second type. For example, the prompt content may be as follows: The memory is full, please delete in time; 10 short messages are waiting to be transmitted.

### 3. A message including the content of the message of the first type and the prompt

In the embodiment of the present invention, the generated message of the second type may include the prompt and the content of message of the first type , so as to ensure that the receiving terminal may receive the message promptly and meanwhile, to remind the user of the current memory state of the mobile phone.

When the message generating unit 203 generates a message of the second type, the message transmitting unit 30 transmits the message of the second type to the receiving terminal. When the message of the second type is transmitted successfully, the message receiving unit 10 may receive the response message of the successful transmission sent by the receiving terminal.

In the apparatus embodiment, when the message of the second type is a prompt, the scheduling unit 201 is further configured to schedule according to the preconfigured retransmission interval of the message of the first type ; the message transmitting unit 30 is further configured to transmit the message of the first type to the receiving terminal when the retransmission interval is reached.

The apparatus in the embodiment of the present invention upgrades the success rate of the message transmission of the MSC, thereby improving the satisfactory degree of the customer as well as the service quality of the operator.

The embodiments of the present invention may be realized by employing software, and the corresponding software programs may be stored in a readable storage medium; when executing the software, the following steps are included:
receiving a response message of the transmission failure of a message of the first type sent by the receiving terminal;
generating a message of the second type according to the response message; and transmitting the message of the second type to the receiving terminal.

The readable medium may be computer hardware, buffer or optic disk.

The above are preferred embodiments of the present invention. It is apparent that those skilled in the art can make various modifications and variations to the invention without departing from the scope of the invention.

## Claims

1. A method for realizing message service, comprising:
receiving, from a receiving terminal, a response message of a transmission failure of a message of a first type;
generating a message of a second type according to the response message; and
sending the message of the second type to the receiving terminal.

2. The method according to Claim 1, wherein receiving, from a receiving terminal, a response message of a transmission failure of a message of the first type comprises:
when the memory of the receiving terminal is full, receiving, from a receiving terminal, a response message of a transmission failure of a message of the first type .

3. The method according to Claim 2, wherein the message of the first type is an ordinary short message, and the receiving, from a receiving terminal, a response message of a transmission failure of a message of the first type when the memory of the receiving terminal is full comprises:
receiving, from a receiving terminal, a response message of the transmission
failure of an ordinary short message;
and generating a message of the second type according to the response message comprises:
generating a flash short message according to the response message; and sending the message of the second type to the receiving terminal comprises:
sending the flash short message to the receiving terminal.

4. The method according to any one of Claims 1 to 3, wherein content of the second type information comprises:
the content of the first type information, and/or a prompt.

5. The method according to Claim 4, wherein the content of the first type information is a prompt, comprising:
sending again the message of the first type to the receiving terminal according to preconfigured rules.

6. An apparatus for realizing message service, comprising:
a message receiving unit , configured to receive, from a receiving terminal, a response message of a transmission failure of a message of the first type ;
a message processing unit, configured to generate a message of the second type according to the response message; and
a message transmitting unit, configured to transmit the message of the second type to the receiving terminal.

7. The apparatus according to Claim 6, wherein the message receiving unit is further configured to receive a response message of the transmission failure of the message of the first type when the memory of the receiving terminal is full.

8. The apparatus according to Claim 7, wherein the message of the first type is an ordinary short message, and the message of the second type is a flash short message.

9. The apparatus according to any one of Claims 6 to 8, wherein the content of the message of the second type comprises: the content of the message of the first type , and/or a prompt.

10. The apparatus according to Claim 9, wherein the message transmitting unit is further configured to retransmit the message of the first type to the receiving terminal according to preconfigured rules.
